# EUROPEAN PATENT APPLICATION

(11) **EP 4 668 913 A1**
(43) Date of publication of application: **24.12.2025**
(21) Application number: 23921907.4
(22) Date of filing: 16.02.2023
(51) Int. Cl.: H04W 64/00, H04W 8/24

(54) **TRANSMISSION METHODS FOR SL POSITIONING CAPABILITY, AND APPARATUSES, DEVICES AND STORAGE MEDIUM**

(71) Applicant: Beijing Xiaomi Mobile Software Co., Ltd., Beijing 100085 (CN)
(72) Inventor: JIANG, Xiaowei, Beijing 100085 (CN)
(74) Representative: Gunzelmann, Rainer
(86) International application number: PCT/CN2023/076611
(87) International publication number: WO 2024/168753

(57) **Abstract**

Provided in the present disclosure are transmission methods for an SL positioning capability, and apparatuses, devices and a storage medium. A transmission method for an SL positioning capability comprises: when a network device participates in SL positioning between terminal devices, sending SL positioning capability information to the network device. By means of the method in the present disclosure, when a network device participates in SL positioning, the SL positioning capability of a UE can be sent to a decision maker, such that the decision maker can make a decision.

## Description

### FIELD

The present invention relates to the field of communication technology, and more particularly, to a Sidelink (SL) positioning capability transmission method, apparatus and device, and a storage medium.

### BACKGROUND

In a communication system, a Sidelink (SL) is introduced to achieve direct communication between terminals. After the introduction of SL, for positioning between terminals, a decision needs to be made based on an SL positioning capability of terminals.

### SUMMARY

The present invention proposes an SL positioning capability transmission method, apparatus and device, and a storage medium, so as to provide an interactive method of the SL positioning capability in a case where a network device participates in SL positioning between terminals.

In a first aspect, embodiments of the present invention provide an SL positioning capability transmission method, performed by a first terminal, including: sending SL positioning capability information to a network device, in a case where the network device participates in SL positioning between terminals.

As can be seen, in the present invention, an interactive method of the SL positioning capability in a case where the network device participates in the SL positioning between terminals is provided, so that the SL positioning capability of a UE is sent to a decision maker to facilitate the decision-making in the case where the network device participates in the SL positioning.

In a second aspect, embodiments of the present invention provide an SL positioning capability transmission method, performed by a network device, including: receiving SL positioning capability information sent by a first terminal, in a case where the network device participates in SL positioning between terminals.

In a third aspect, embodiments of the present invention provide a communication device, including: a transceiver module, configured to send SL positioning capability information to a network device, in a case where the network device participates in SL positioning between terminals.

In a fourth aspect, embodiments of the present invention provide a communication device, including: a transceiver module, configured to receive SL positioning capability information sent by a first terminal, in a case where a network device participates in SL positioning between terminals.

In a fifth aspect, embodiments of the present invention provide a communication device, which includes a processor. The processor, when calling computer programs in a memory, performs the method as described in the first aspect or the second aspect.

In a sixth aspect, embodiments of the present invention provide a communication device, which includes a processor and a memory, the memory has stored therein computer programs, and the processor is configured to execute the computer programs stored in the memory to cause the communication device to perform the method as described in the first aspect or the second aspect.

In a seventh aspect, embodiments of the present invention provide a communication device, which includes a processor and an interface circuit, the interface circuit is configured to receive code instructions and transmit the code instructions to the processor; and the processor is configured to run the code instructions to cause the device to perform the method as described in the first aspect or the second aspect.

In an eighth aspect, embodiments of the present invention provide a communication system, the system includes the communication device described in the third aspect or the fourth aspect, or the system includes the communication device described in the fifth aspect, or the system includes the communication device described in the sixth aspect, or the system includes the communication device described in the seventh aspect.

In a ninth aspect, embodiments of the present invention provide a computer-readable storage medium having stored therein instructions for using by the above network device, and the instructions, when executed, cause a terminal to perform the method as described in the first aspect or the second aspect.

In a tenth aspect, the present invention further provides a computer program product including computer programs that, when executed on a computer, cause the computer to perform the method as described in the first aspect or the second aspect.

In an eleventh aspect, the present invention provides a chip system, which includes at least one processor and at least one interface, for supporting a network device to implement the functions involved in the method as described in the first aspect or the second aspect, for example, determining or processing at least one of data and information involved in the above methods. In a possible design, the chip system also includes a memory for storing computer programs and data necessary for source and secondary nodes. The chip system may be composed of chips, or may include a chip and other discrete devices.

In a twelfth aspect, the present invention provides a computer program that, when executed on a computer, causes the computer to perform the method as described in the first aspect or the second aspect.

### BRIEF DESCRIPTION OF THE DRAWINGS

The above and/or additional aspects and advantages of present invention will become apparent and easily understood from the following description of embodiments with reference to the accompanying drawings, in which:
FIG. 1 is a schematic architecture diagram for SL-TDOA positioning according to embodiments of the present invention;
FIG. 2 is a schematic architecture diagram of a communication system according to embodiments of the present invention;
FIG. 3 is a schematic flow chart of an SL positioning capability transmission method according to an embodiment of the present invention;
FIG. 4 is a schematic flow chart of an SL positioning capability transmission method according to another embodiment of the present invention;
FIG. 5 is a schematic flow chart of an SL positioning capability transmission method according to another embodiment of the present invention;
FIG. 6 is a schematic flow chart of an SL positioning capability transmission method according to another embodiment of the present invention;
FIG. 7 is a schematic flow chart of an SL positioning capability transmission method according to another embodiment of the present invention;
FIG. 8 is a schematic flow chart of an SL positioning capability transmission method according to another embodiment of the present invention;
FIG. 9 is a schematic flow chart of an SL positioning capability transmission method according to another embodiment of the present invention;
FIG. 10 is a schematic flow chart of an SL positioning capability transmission method according to another embodiment of the present invention;
FIG. 11 is a schematic flow chart of an SL positioning capability transmission method according to another embodiment of the present invention;
FIG. 12 is a schematic flow chart of an SL positioning capability transmission method according to another embodiment of the present invention;
FIG. 13 is a schematic flow chart of an SL positioning capability transmission method according to another embodiment of the present invention;
FIG. 14 is a schematic flow chart of an SL positioning capability transmission method according to another embodiment of the present invention;
FIG. 15 is a schematic flow chart of an SL positioning capability transmission method according to another embodiment of the present invention;
FIG. 16 is a schematic flow chart of an SL positioning capability transmission method according to another embodiment of the present invention;
FIG. 17 is a schematic interactive diagram of an SL positioning capability transmission method according to an embodiment of the present invention;
FIG. 18 is a schematic interactive diagram of an SL positioning capability transmission method according to another embodiment of the present invention;
FIG. 19 is a schematic block diagram of a communication device according to another embodiment of the present invention;
FIG. 20 is a schematic block diagram of a communication device according to another embodiment of the present invention;
FIG. 21 is a schematic block diagram of a communication device according to embodiments of the present application; and
FIG. 22 is a schematic block diagram of a chip according to an embodiment of the present invention.

### DETAILED DESCRIPTION

Reference will now be made in detail to illustrative embodiments, examples of which are illustrated in the accompanying drawings. The following description refers to the accompanying drawings in which the same numbers in different drawings represent the same or similar elements unless otherwise represented. The implementations described in the following illustrative embodiments do not represent all implementations consistent with the present invention. Instead, they are examples of apparatuses and methods consistent with some aspects of embodiments of the present invention as recited in the appended claims.

Terms used in embodiments of the present invention are for the purpose of describing specific embodiments, but should not be construed to limit embodiments of the present invention. As used in embodiments of the present invention and the appended claims, "a/an", "said" and "the" in singular forms are intended to include plural forms, unless clearly indicated in the context otherwise. It should also be understood that, the term "and/or" used herein represents and contains any one or any possible combinations of one or more associated items listed.

It should be understood that, although terms such as "first," "second" and "third" may be used in embodiments of the present invention for describing various information, these information should not be limited by these terms. These terms are used for distinguishing information of the same type from each other. For example, first information may also be referred to as second information, and similarly, the second information may also be referred to as the first information, without departing from the scope of embodiments of the present invention. Depending on the context, the term "if" as used herein may be construed to mean "when" or "upon" or "in response to determining".

Embodiments of the present invention are described in detail below, examples of which are shown in the accompanying drawings, in which the same or similar reference numerals throughout represent the same or similar elements. The embodiments described below with reference to the accompanying drawings are examples, and are intended to be used to explain the present invention, and should not be construed as limiting the present invention.

To facilitate understanding, terms involved in the present invention are first introduced.
1. Sidelink (SL)
   A link for direct communication between terminals.
2. User to Network interface Universal (Uu) port
   A wireless interface between a terminal and a base station, where the terminal is also called User Equipment (UE).
3. Sidelink positioning

Positioning based on the Sidelink between UEs, including SL absolute positioning, SL relative positioning, and ranging. Absolute positioning is to determine absolute coordinates of a UE. Relative positioning is to determine coordinates of a UE relative to a reference point. Ranging is to determine a distance and/or angle of a UE relative to a reference point. Ranging usually involves ranging between two UEs, but absolute positioning and relative positioning may involve multiple UEs to participate in positioning.

The SL, Uu and Sidelink positioning mentioned above are example descriptions in the present invention, the present invention are not specifically limited to these names, and other network elements that are able to implement similar functions are also within the protection scope of the present invention.

In a communication system, positioning based on a Uu port is called Uu port positioning, and positioning styles for the Uu port positioning include Time Difference Of Arrival (TDOA) positioning, Angle of Departure (AOD) positioning, Angle of Arrival (AOA) positioning, multi Round trip time (multi-RTT) positioning, Assisted Global Navigation Satellite System (A-GNSS) positioning, Wireless Local Area Network (WLAN) positioning, Bluetooth positioning, sensor positioning, carrier phase positioning, Enhanced Cell identification (E-CID) positioning, etc.

Positioning styles for SL positioning include SL-RTT, SL-TDOA, SL-AOA, SL carrier phase, etc. Furthermore, the positioning style for the SL positioning may also be combined with the positioning style for the Uu port positioning to improve the positioning accuracy. In addition, if an absolute position of a UE needs to be obtained, an absolute position of a reference UE may be obtained through the Uu port positioning, relative positions of the target UE and the reference UE may be obtained through relative positioning, and then the absolute position of the target UE is calculated according to the absolute position of the reference UE and the relative positions of the target UE and the reference UE.

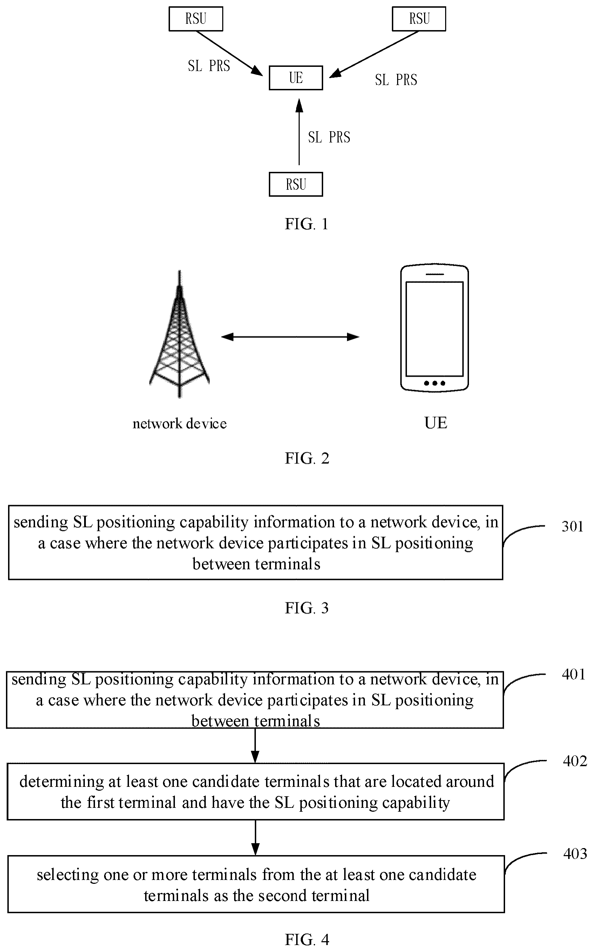

FIG. 1 is a schematic architecture diagram for SL-TDOA positioning according to embodiments of the present invention. As shown in FIG. 1, by measuring positioning reference signals (PRSs) sent by a plurality of RSUs (greater than or equal to 3 RSUs) via the SL, a UE is able to determine a position of the UE relative to the RSUs.

If the positioning result is not converted into absolute position coordinates according to absolute position information of the RSUs, like Global Positioning System (GPS) position information, the positioning result is relative positioning. Otherwise, it is absolute positioning. The UE being positioned is the target UE, and other UEs that support positioning the target UE are anchor UEs. If positioning involves only two UEs, they are each other's anchor UEs.

There are different types of anchor UEs. For example, an anchor UE of RSU type is an infrastructure that can provide a positioning service through cooperation with other RSUs. For example, a common UE can also serve as an anchor UE, but it is difficult for it to assist in providing the positioning service together with other UEs. In addition, some anchor UEs have position information like GPS information, which can assist other UEs in absolute positioning, while some other anchor UEs may not have position information like GPS information.

The SL positioning may be performed with or without the participation of the network (base station/Location Management Function (LMF)). For example, in a case where the UE is out of coverage, there is no network participation in the SL positioning. However, in a case where the UE is in coverage, the network may participate in the SL positioning.

In the case where the network device participates in the SL positioning, because a positioning decision (such as determination of the positioning style, selection of anchor UE for positioning, selection of SL-PRS resource for positioning, who does positioning calculation, etc.) may be made by UE (target UE, anchor UE, or server UE) or LMF, UE's SL positioning capability needs to be sent to the decision maker to allow the decision maker to make a decision. Therefore, how to determine which UE's capability needs to be sent to the LMF, who sends it to the LMF, and how to deal with the situation where some of UEs participating in the positioning may be out of coverage have become the focus of attention.

For better understanding of the SL positioning capability transmission method disclosed in embodiments of the present invention, the communication system to which embodiments of the present invention are applicable is first described below.

Referring to FIG. 2, FIG. 2 is a schematic architecture diagram of a communication system according to embodiments of the present invention. The communication system may include, but not limited to, a network device and a UE. Optionally, the number and form of devices shown in FIG. 2 are used as an example, and do not constitute a limitation on embodiments of the present invention. In practice, one or more network devices or one or more UEs may be included. Optionally, as an example for illustration, the communication system shown in FIG. 2 includes one network device and one UE.

It should be noted that the technical solutions of embodiments of the present invention are applicable to various communication systems, for example, a long term evolution (LTE) system, a 5th generation (5G) mobile communication system, a 5G new radio (NR) system, other new mobile communication systems in the future, etc.

The UE in embodiments of the present invention may be an entity at a user side for receiving or sending signals, such as a mobile phone. It may also be referred to as a terminal, a user equipment (UE), a mobile station (MS), a mobile terminal (MT), and so on. The UE may be a device with a communication function, such as a car, a smart car, a mobile phone, a wearable device, a tablet Pad, a computer with a wireless transceiver function, a virtual reality (VR) terminal, an augmented reality (AR) terminal, a wireless terminal in industrial control, a wireless terminal in self-driving, a wireless terminal in remote medical surgery, a wireless terminal in smart grid, a wireless terminal in transportation safety, a wireless terminal in smart city, a wireless terminal in smart home, etc. Embodiments of the present invention do not limit the specific technique and the specific device form adopted by the UE.

The network device in embodiments of the present invention may be a base station, a core network device, or an LMF. Optionally, the core network device may be a device deployed in the core network, and functions of the core network device are mainly to provide user connection, user management, and service carrying to provide an interface to an external network as a bearer network. For example, the core network device in the 5G NR system may include at least one of an access and mobility management function (AMF) network element, a user plane function (UPF) network element, a session management function (SMF) network element, a mobility management entity (MME), or the like.

It may be understood that the communication system described in embodiments of the present invention is intended to illustrate the technical solutions of embodiments of the present invention more clearly, and does not constitute a limitation to the technical solutions according to embodiments of the present invention. Those of ordinary skill in the art will know that with the evolution of the system architecture and the emergence of new service scenarios, the technical solutions according to embodiments of the present invention are also applicable to similar technical problems.

The SL positioning capability transmission method, apparatus and device as well as the storage medium according to embodiments of the present invention will be described in detail below with reference to the accompanying drawings.

It should be noted that in the present invention, in absence of contradiction, each step in any embodiment or example may be implemented as an independent embodiment, and the various steps may be arbitrarily combined. For example, a scheme obtained by removing some steps from a certain embodiment or example may also be implemented as an independent example, and the order of the steps in a certain embodiment or example may be arbitrarily exchanged. In addition, optional manners or optional examples in a certain embodiment or implementation may be arbitrarily combined. In addition, various embodiments or examples may be arbitrarily combined, for example, some or all steps of different embodiments or examples may be arbitrarily combined, and a certain embodiment or implementation may be arbitrarily combined with optional manners or optional examples of other embodiments or implementations. With regard to the expressions in the present invention like "A or B", "A and/or B", "at least one of A or B", "A in a case, B in another case", or "A in response to a case, B in response to another case", at least one of the following schemes may be included depending on situations: A is executed independently of B, i.e., A in some implementations; B is executed independently of A, i.e., B in some implementations; A and B are selectively executed, i.e., A and B are selectively executed in some implementations; A and B are both executed, i.e., both A and B in some implementations. In addition, each element, each row, or each column in the table involved in the present invention may be implemented as an independent embodiment, and the combination of any elements, any rows, and any columns may also be implemented as an independent embodiment.

FIG. 3 is a schematic flow chart of an SL positioning capability transmission method according to embodiments of the present invention, the method is performed by a first terminal, and as shown in FIG. 3, the SL positioning capability transmission method may include a following step.

Step 301, SL positioning capability information is sent to a network device, in a case where the network device participates in SL positioning between terminals.

Optionally, in an embodiment of the present invention, the network device may include a base station or an LMF.

Optionally, in an embodiment of the present invention, the SL positioning capability information includes at least one of: SL positioning capability information of the first terminal; or SL positioning capability information of a second terminal.

Optionally, in an embodiment of the present invention, the first terminal is one of: a terminal initiating the SL positioning; a target terminal; or an anchor terminal.

Optionally, in an embodiment of the present invention, with respect to positioning initiated by a UE, the first terminal may be a terminal initiating the SL positioning, and the terminal initiating the SL positioning may be a target terminal or an anchor terminal.

Optionally, in an embodiment of the present invention, with respect to positioning initiated by a network device, the first terminal may be an anchor terminal or a target terminal.

Optionally, in an embodiment of the present invention, the second terminal includes one or more terminals located around the first terminal and having an SL positioning capability.

Optionally, in an embodiment of the present invention, around the first terminal may refer to in coverage of first terminal.

Optionally, in an embodiment of the present invention, the second terminal may include one or more terminals that are located around the first terminal, have the SL positioning capability, but are out of network coverage; or the second terminal may include one or more terminals that are located around the first terminal and in network coverage, have the SL positioning capability, but are not in a connected state.

Optionally, in an embodiment of the present invention, the SL positioning capability information includes at least one of: identification information of a terminal of which the SL positioning capability information is to be reported, where the terminal of which the SL positioning capability information is to be reported includes the first terminal and/or the second terminal; an SL positioning style supported by the terminal of which the SL positioning capability information is to be reported; or an SL positioning bandwidth supported by the terminal of which the SL positioning capability information is to be reported.

Optionally, in implementations or embodiments of the present invention, the SL positioning style includes SL-RTT, SL-AOA, SL-AOD, SL-carrier phase, or SL-TDOA.

Optionally, in implementations or embodiments of the present invention, the identification information of the terminal of which the SL positioning capability information is to be reported includes at least one of:
a source layer 2 identification (source layer 2 ID) of the terminal of which the SL positioning capability information is to be reported;
a target layer 2 identification (target layer 2 ID) of the terminal of which the SL positioning capability information is to be reported;
an international mobile equipment identity (IMEI) of the terminal of which the SL positioning capability information is to be reported;
an international mobile subscriber identity (IMSI) of the terminal of which the SL positioning capability information is to be reported;
an SAE-temporary mobile subscriber identity (S-TMSI)/temporary mobile subscriber identity (TMSI) of the terminal of which the SL positioning capability information is to be reported; or
an application layer identification (application layer ID) of the terminal of which the SL positioning capability information is to be reported.

Optionally, in implementations or embodiments of the present invention, the identification information of the terminal of which the SL positioning capability information is to be reported may be understood as identification information of the first terminal, and may also be understood as identification information of the second terminal.

Optionally, in an embodiment of the present invention, if the terminal communicates directly with the LMF, the terminal does not need to provide its own identification information.

Optionally, the "SL positioning capability information" mentioned in embodiments of the present invention is merely an example name used in the present invention and may also be expressed in other words, which is not limited by the present invention.

Optionally, in implementations or embodiments of the present invention, in the absence of contradiction, individual steps may be performed independently, arbitrarily combined or exchanged in order, and optional manners or optional examples may be arbitrarily combined, and may be arbitrarily combined with other implementations or embodiments.

To sum up, in the SL positioning capability transmission method according to embodiments of the present invention, an interactive method of the SL positioning capability in the case where the network device participates in the SL positioning between terminals is provided, so that the SL positioning capability of the UE is sent to a decision maker to facilitate the decision-making in the case where the network device participates in the SL positioning.

FIG. 4 is a schematic flow chart of an SL positioning capability transmission method according to embodiments of the present invention, the method is performed by a first terminal, and as shown in FIG. 4, the SL positioning capability transmission method may include following steps.

Step 401, SL positioning capability information is sent to a network device, in a case where the network device participates in SL positioning between terminals.

In embodiments of the present invention, the introduction to step 401 may refer to the description of step 301, and will not be elaborated in embodiments of the present invention here. Optional examples in embodiments of the present invention may be combined arbitrarily, and embodiments of the present invention may be combined with the steps of other embodiments and/or optional examples in other embodiments without contradiction.

Step 402, at least one candidate terminals that are located around the first terminal and have the SL positioning capability are determined.

Step 403, one or more terminals are selected from the at least one candidate terminals as the second terminal.

Optionally, in implementations or embodiments of the present invention, the at least one candidate terminal may refer to one or more terminals (target terminal, anchor terminal) selected from UEs located around the first terminal and having the SL positioning capability.

Optionally, in an embodiment of the present invention, the second terminal includes one or more terminals located around the first terminal and having the SL positioning capability.

Optionally, in an embodiment of the present invention, around the first terminal may refer to in coverage of the first terminal. Therefore, the first terminal may search for other terminals in coverage to determine other terminals in coverage of the first terminal. Further, the SL positioning capability of other terminals in coverage of the first terminal may be determined to obtain one or more candidate terminals. Further, the target terminal and the anchor terminal may also be determined among other terminals in coverage of the first terminal, and then the SL positioning capability of the target terminal and the anchor terminal may be determined to obtain the candidate terminals.

Optionally, in an embodiment of the present invention, the second terminal may include one or more terminals that are located around the first terminal, have the SL positioning capability, but are out of network coverage; or the second terminal may include one or more terminals that are located around the first terminal and in network coverage, have the SL positioning capability, but are not in a connected state.

To sum up, in the SL positioning capability transmission method according to embodiments of the present invention, an interactive method of the SL positioning capability in the case where the network device participates in the SL positioning between terminals is provided, so that the SL positioning capability of the UE is sent to a decision maker to facilitate the decision-making in the case where the network device participates in the SL positioning.

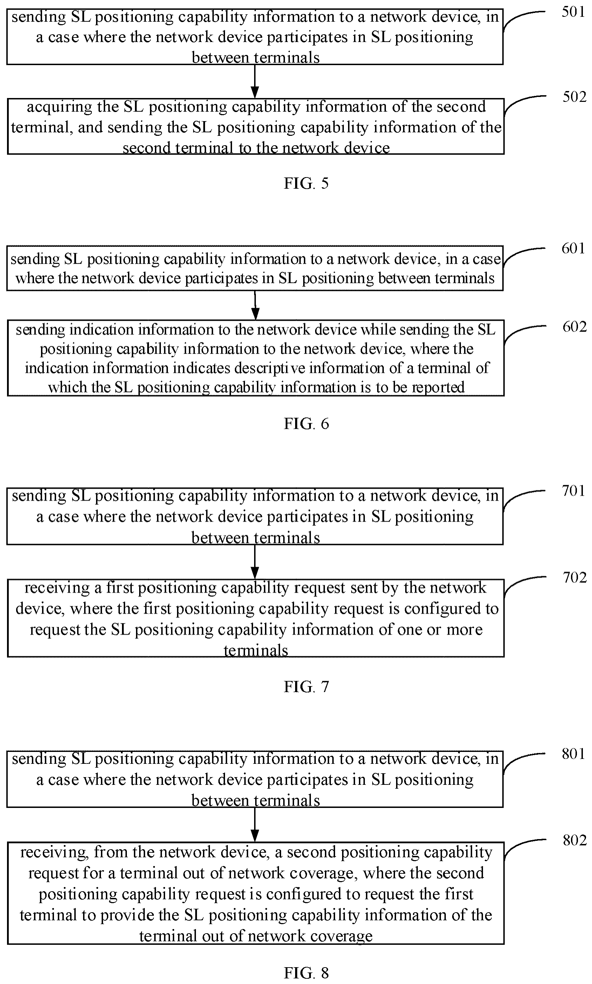

FIG. 5 is a schematic flow chart of an SL positioning capability transmission method according to embodiments of the present invention, the method is performed by a first terminal, and as shown in FIG. 5, the SL positioning capability transmission method may include following steps.

Step 501, SL positioning capability information is sent to a network device, in a case where the network device participates in SL positioning between terminals.

In embodiments of the present invention, the introduction to step 501 may refer to the description of step 301, and will not be elaborated in embodiments of the present invention here. Optional examples in embodiments of the present invention may be combined arbitrarily, and embodiments of the present invention may be combined with the steps of other embodiments and/or optional examples in other embodiments without contradiction.

Step 502, the SL positioning capability information of the second terminal is acquired, and the SL positioning capability information of the second terminal is sent to the network device.

Optionally, in implementations or embodiments of the present invention, when the first terminal acquires the SL positioning capability information of one or more second terminals, the SL positioning capability information of the one or more second terminals may be carried in a message and sent to the network device through the message, or may be sent to the network device through multiple messages, respectively.

To sum up, in the SL positioning capability transmission method according to embodiments of the present invention, an interactive method of the SL positioning capability in the case where the network device participates in the SL positioning between terminals is provided, so that the SL positioning capability of the UE is sent to a decision maker to facilitate the decision-making in the case where the network device participates in the SL positioning.

FIG. 6 is a schematic flow chart of an SL positioning capability transmission method according to embodiments of the present invention, the method is performed by a first terminal, and as shown in FIG. 6, the SL positioning capability transmission method may include following steps.

Step 601, SL positioning capability information is sent to a network device, in a case where the network device participates in SL positioning between terminals.

In embodiments of the present invention, the introduction to step 601 may refer to the description of step 301, and will not be elaborated in embodiments of the present invention here. Optional examples in embodiments of the present invention may be combined arbitrarily, and embodiments of the present invention may be combined with the steps of other embodiments and/or optional examples in other embodiments without contradiction.

Step 602, indication information is sent to the network device while sending the SL positioning capability information to the network device, and the indication information indicates descriptive information of a terminal of which the SL positioning capability information is to be reported.

Optionally, in implementations or embodiments of the present invention, the terminal of which the SL positioning capability information is to be reported includes one of: a terminal, discovered by the first terminal, located around the first terminal and having the SL positioning capability; an anchor terminal determined by the first terminal; or a target terminal determined by the first terminal.

Optionally, in implementations or embodiments of the present invention, the indication information indicates at least one of:
whether the terminal of which the SL positioning capability information is to be reported being in network coverage;
a current state of the terminal of which the SL positioning capability information is to be reported;
identification information of the terminal of which the SL positioning capability information is to be reported;
a terminal role supported by the terminal of which the SL positioning capability information is to be reported; or
an SL signal quality of the terminal of which the SL positioning capability information is to be reported.

Optionally, in implementations or embodiments of the present invention, the current state of the terminal includes a connected state, an inactive state, or an idle state.

Optionally, in implementations or embodiments of the present invention, the terminal role includes an anchor terminal, a target terminal, or a server terminal, etc.

Optionally, in implementations or embodiments of the present invention, when the terminal communicates directly with the LMF, the terminal does not need to provide its own identification information.

Optionally, in implementations or embodiments of the present invention, when the indication information is used to indicate the descriptive information of the terminal of which the SL positioning capability information is to be reported, the indication information may be used to indicate the descriptive information of one or more terminals of which the SL positioning capability information is to be reported.

To sum up, in the SL positioning capability transmission method according to embodiments of the present invention, an interactive method of the SL positioning capability in the case where the network device participates in the SL positioning between terminals is provided, so that the SL positioning capability of the UE is sent to a decision maker to facilitate the decision-making in the case where the network device participates in the SL positioning.

FIG. 7 is a schematic flow chart of an SL positioning capability transmission method according to embodiments of the present invention, the method is performed by a first terminal, and as shown in FIG. 7, the SL positioning capability transmission method may include following steps.

Step 701, SL positioning capability information is sent to a network device, in a case where the network device participates in SL positioning between terminals.

In embodiments of the present invention, the introduction to step 701 may refer to the description of step 301, and will not be elaborated in embodiments of the present invention here. Optional examples in embodiments of the present invention may be combined arbitrarily, and embodiments of the present invention may be combined with the steps of other embodiments and/or optional examples in other embodiments without contradiction.

Step 702, a first positioning capability request sent by the network device is received, and the first positioning capability request is configured to request the SL positioning capability information of one or more terminals.

Optionally, in implementations or embodiments of the present invention, when the first positioning capability request is used to request the SL positioning capability information of one or more terminals, the SL positioning capability information of one or more terminals requested may include the SL positioning capability information of the first terminal, or may not include the SL positioning capability information of the first terminal.

Optionally, in implementations or embodiments of the present invention, in a case where the first positioning capability request does not include the SL positioning capability information of the first terminal, the first terminal may report its own SL positioning capability information by default.

Optionally, in implementations or embodiments of the present invention, the first positioning capability request includes identification information of the terminal requested. That is, a second positioning capability request includes identification information of a terminal out of network coverage. For detailed introduction to the identification information of the terminal requested, reference may be made to the relevant contents in the above embodiments, which will not be repeated here.

Optionally, in implementations or embodiments of the present invention, after the first terminal receives the first positioning capability request sent by the network device, the first terminal may feed back the SL positioning capability information of the terminal requested to the network device.

Optionally, in implementations or embodiments of the present invention, before the first terminal feeds back the SL positioning capability information of the terminal requested to the network device, the first terminal may acquire, from the terminal requested, the SL positioning capability information of the terminal requested.

Optionally, in implementations or embodiments of the present invention, if the first terminal fails to acquire the SL positioning capability information of the terminal requested by the network device, the first terminal sends unavailable indication information to the network device. The unavailable indication information is used to indicate that the SL positioning capability information of the terminal requested cannot be obtained.

To sum up, in the SL positioning capability transmission method according to embodiments of the present invention, an interactive method of the SL positioning capability in the case where the network device participates in the SL positioning between terminals is provided, so that the SL positioning capability of the UE is sent to a decision maker to facilitate the decision-making in the case where the network device participates in the SL positioning.

FIG. 8 is a schematic flow chart of an SL positioning capability transmission method according to embodiments of the present invention, the method is performed by a first terminal, and as shown in FIG. 8, the SL positioning capability transmission method may include following steps.

Step 801, SL positioning capability information is sent to a network device, in a case where the network device participates in SL positioning between terminals.

In embodiments of the present invention, the introduction to step 801 may refer to the description of step 301, and will not be elaborated in embodiments of the present invention here. Optional examples in embodiments of the present invention may be combined arbitrarily, and embodiments of the present invention may be combined with the steps of other embodiments and/or optional examples in other embodiments without contradiction.

Step 802, a second positioning capability request for a terminal out of network coverage is received from the network device, and the second positioning capability request is used to request the first terminal to provide the SL positioning capability information of the terminal out of network coverage.

Optionally, in implementations or embodiments of the present invention, the second positioning capability request includes identification information of the terminal requested. That is, the second positioning capability request includes the identification information of the terminal out of network coverage. For detailed introduction to the identification information of the terminal requested, reference may be made to the relevant contents in the above embodiments, which will not be repeated here.

Optionally, in implementations or embodiments of the present invention, after the first terminal receives the second positioning capability request for the terminal out of network coverage from the network device, the first terminal may feed back the SL positioning capability information of the requested terminal that is out of network coverage to the network device.

Optionally, in implementations or embodiments of the present invention, if the first terminal fails to acquire the SL positioning capability information of the terminal out of network coverage that is requested by the network device, the first terminal sends unavailable indication information to the network device. The unavailable indication information is used to indicate that the SL positioning capability information of the terminal out of network coverage that is requested by the network device cannot be obtained.

To sum up, in the SL positioning capability transmission method according to embodiments of the present invention, an interactive method of the SL positioning capability in the case where the network device participates in the SL positioning between terminals is provided, so that the SL positioning capability of the UE is sent to a decision maker to facilitate the decision-making in the case where the network device participates in the SL positioning.

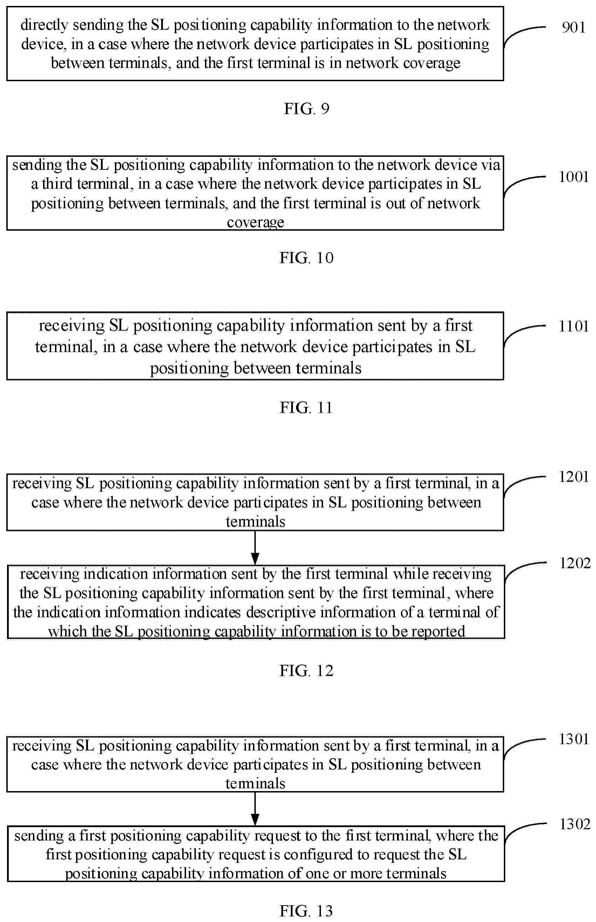

FIG. 9 is a schematic flow chart of an SL positioning capability transmission method according to embodiments of the present invention, the method is performed by a first terminal, and as shown in FIG. 9, the SL positioning capability transmission method may include a following step.

Step 901, SL positioning capability information is directly sent to a network device, in a case where the network device participates in SL positioning between terminals, and the first terminal is in network coverage.

In embodiments of the present invention, the introduction to step 901 may refer to the description of step 301, and will not be elaborated in embodiments of the present invention here. Optional examples in embodiments of the present invention may be combined arbitrarily, and embodiments of the present invention may be combined with the steps of other embodiments and/or optional examples in other embodiments without contradiction.

To sum up, in the SL positioning capability transmission method according to embodiments of the present invention, an interactive method of the SL positioning capability in the case where the network device participates in the SL positioning between terminals is provided, so that the SL positioning capability of the UE is sent to a decision maker to facilitate the decision-making in the case where the network device participates in the SL positioning.

FIG. 10 is a schematic flow chart of an SL positioning capability transmission method according to embodiments of the present invention, the method is performed by a first terminal, and as shown in FIG. 10, the SL positioning capability transmission method may include a following step.

Step 1001, SL positioning capability information is sent to a network device via a third terminal, in a case where the network device participates in SL positioning between terminals, and the first terminal is out of network coverage.

In embodiments of the present invention, the introduction to step 1001 may refer to the description of step 301, and will not be elaborated in embodiments of the present invention here. Optional examples in embodiments of the present invention may be combined arbitrarily, and embodiments of the present invention may be combined with the steps of other embodiments and/or optional examples in other embodiments without contradiction.

Optionally, in implementations or embodiments of the present invention, in the case where the first terminal sends the SL positioning capability information to the network device via the third terminal, the first terminal may select, from terminals that are discovered by the first terminal, located around the first terminal and support the SL positioning, a terminal in network coverage as the third terminal. The first terminal may send the SL positioning capability information to the third terminal, and the third terminal forwards the SL positioning capability information to the network device.

Optionally, in implementations or embodiments of the present invention, when the first terminal sends the SL positioning capability information to the third terminal, the first terminal may sent SL positioning capability information of one or more terminals to the third terminal.

Optionally, in implementations or embodiments of the present invention, when the third terminal sends the SL positioning capability information to the network device, the third terminal may send the SL positioning capability information of the third terminal to the network device at the same time.

Optionally, in implementations or embodiments of the present invention, while the first terminal sends the SL positioning capability information to the third terminal, the first terminal may send first forwarding indication information to the third terminal at the same time, and the first forwarding indication information is used to indicate the third terminal to forward the SL positioning capability information to the network device.

Optionally, in implementations or embodiments of the present invention, while the first terminal sends the SL positioning capability information to the third terminal, the first terminal may send second forwarding indication information to the third terminal at the same time, and the second forwarding indication information is used to indicate the third terminal whether to forward the SL positioning capability information to the network device.

Optionally, in implementations or embodiments of the present invention, when the first terminal sends the SL positioning capability information to the third terminal, the first terminal may send the information that needs to be provided to the network device to the third terminal in an explicit indication manner. Alternatively, the first terminal may send the information that needs to be provided to the network device to the third terminal in an implicit indication manner.

In some implementations, the first terminal may also encapsulate the information that needs to be provided to the network device in a special container. For example, a Lightweight Presentation Protocol (LPP) message may be encapsulated in the container. At this time, the third terminal may directly send the information in the container to the network device.

To sum up, in the SL positioning capability transmission method according to embodiments of the present invention, an interactive method of the SL positioning capability in the case where the network device participates in the SL positioning between terminals is provided, so that the SL positioning capability of the UE is sent to a decision maker to facilitate the decision-making in the case where the network device participates in the SL positioning. Further, by forwarding the SL positioning capability information to the network device through the third terminal, the situation where the network device cannot acquire the SL positioning capability information due to the first terminal being out of network coverage is avoided.

FIG. 11 is a schematic flow chart of an SL positioning capability transmission method according to embodiments of the present invention, the method is performed by a network device, and as shown in FIG. 11, the SL positioning capability transmission method may include a following step.

Step 1101, SL positioning capability information sent by a first terminal is received, in a case where the network device participates in SL positioning between terminals.

In embodiments of the present invention, the introduction to step 1101 may refer to the description of step 301, and will not be elaborated in embodiments of the present invention here. Optional examples in embodiments of the present invention may be combined arbitrarily, and embodiments of the present invention may be combined with the steps of other embodiments and/or optional examples in other embodiments without contradiction.

To sum up, in the SL positioning capability transmission method according to embodiments of the present invention, an interactive method of the SL positioning capability in the case where the network device participates in the SL positioning between terminals is provided, so that the SL positioning capability of the UE is sent to a decision maker to facilitate the decision-making in the case where the network device participates in the SL positioning.

FIG. 12 is a schematic flow chart of an SL positioning capability transmission method according to embodiments of the present invention, the method is performed by a network device, and as shown in FIG. 12, the SL positioning capability transmission method may include following steps.

Step 1201, SL positioning capability information sent by a first terminal is received, in a case where the network device participates in SL positioning between terminals.

Step 1202: indication information sent by the first terminal is received while receiving the SL positioning capability information sent by the first terminal, and the indication information indicates descriptive information of a terminal of which the SL positioning capability information is to be reported.

In embodiments of the present invention, the introduction to steps 1201-1202 may refer to the description of steps 601-602, and will not be elaborated in embodiments of the present invention here. Optional examples in embodiments of the present invention may be combined arbitrarily, and embodiments of the present invention may be combined with the steps of other embodiments and/or optional examples in other embodiments without contradiction.

To sum up, in the SL positioning capability transmission method according to embodiments of the present invention, an interactive method of the SL positioning capability in the case where the network device participates in the SL positioning between terminals is provided, so that the SL positioning capability of the UE is sent to a decision maker to facilitate the decision-making in the case where the network device participates in the SL positioning.

FIG. 13 is a schematic flow chart of an SL positioning capability transmission method according to embodiments of the present invention, and the method is performed by a network device, as shown in FIG. 13.

Step 1301, SL positioning capability information sent by a first terminal is received, in a case where the network device participates in SL positioning between terminals.

Step 1302, a first positioning capability request is sent to the first terminal, and the first positioning capability request is configured to request the SL positioning capability information of one or more terminals.

In embodiments of the present invention, the introduction to steps 1301-1302 may refer to the description of steps 701-702, and will not be elaborated in embodiments of the present invention here. Optional examples in embodiments of the present invention may be combined arbitrarily, and embodiments of the present invention may be combined with the steps of other embodiments and/or optional examples in other embodiments without contradiction.

Optionally, in implementations or embodiments of the present invention, in a case where the network device has received the SL positioning capability information of one or more terminals sent by the first terminal, if the network device still needs to acquire SL positioning capability information of other terminals in addition to the received SL positioning capability information, the network device may send the first positioning capability request to the first terminal. At this time, the one or more terminals requested in the first positioning capability request are those in one or more candidate terminals provided by the first terminal to the network device.

Optionally, in implementations or embodiments of the present invention, if the first terminal fails to acquire the SL positioning capability information of the terminal requested by the network device, the network device may receive unavailable indication information sent by the first terminal.

To sum up, in the SL positioning capability transmission method according to embodiments of the present invention, an interactive method of the SL positioning capability in the case where the network device participates in the SL positioning between terminals is provided, so that the SL positioning capability of the UE is sent to a decision maker to facilitate the decision-making in the case where the network device participates in the SL positioning.

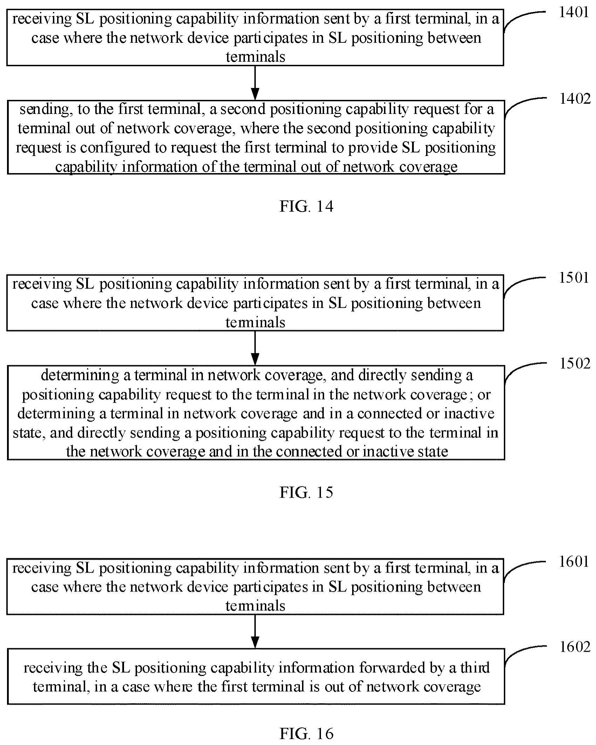

FIG. 14 is a schematic flow chart of an SL positioning capability transmission method according to embodiments of the present invention, and the method is performed by a network device, as shown in FIG. 14.

Step 1401, SL positioning capability information sent by a first terminal is received, in a case where the network device participates in SL positioning between terminals.

Step 1402, a second positioning capability request for a terminal out of network coverage is sent to the first terminal, and the second positioning capability request is configured to request the first terminal to provide SL positioning capability information of the terminal out of network coverage.

In embodiments of the present invention, the introduction to steps 1401-1402 may refer to the description of steps 801-802, and will not be elaborated in embodiments of the present invention here. Optional examples in embodiments of the present invention may be combined arbitrarily, and embodiments of the present invention may be combined with the steps of other embodiments and/or optional examples in other embodiments without contradiction.

Optionally, in implementations or embodiments of the present invention, if the first terminal fails to obtain the SL positioning capability information of the terminal requested by the network device, the network device may receive unavailable indication information sent by the first terminal.

To sum up, in the SL positioning capability transmission method according to embodiments of the present invention, an interactive method of the SL positioning capability in the case where the network device participates in the SL positioning between terminals is provided, so that the SL positioning capability of the UE is sent to a decision maker to facilitate the decision-making in the case where the network device participates in the SL positioning.

FIG. 15 is a schematic flow chart of an SL positioning capability transmission method according to embodiments of the present invention, and the method is performed by a network device, as shown in FIG. 15.

Step 1501, SL positioning capability information sent by a first terminal is received, in a case where the network device participates in SL positioning between terminals.

In embodiments of the present invention, the introduction to step 1501 may refer to the description of step 301, and will not be elaborated in embodiments of the present invention here. Optional examples in embodiments of the present invention may be combined arbitrarily, and embodiments of the present invention may be combined with the steps of other embodiments and/or optional examples in other embodiments without contradiction.

Step 1502, a terminal in network coverage is determined, and a positioning capability request is directly sent to the terminal in the network coverage; or a terminal in network coverage and in a connected or inactive state is determined, and a positioning capability request is directly sent to the terminal in the network coverage and in the connected or inactive state.

To sum up, in the SL positioning capability transmission method according to embodiments of the present invention, an interactive method of the SL positioning capability in the case where the network device participates in the SL positioning between terminals is provided, so that the SL positioning capability of the UE is sent to a decision maker to facilitate the decision-making in the case where the network device participates in the SL positioning.

FIG. 16 is a schematic flow chart of an SL positioning capability transmission method according to embodiments of the present invention, and the method is performed by a network device, as shown in FIG. 16.

Step 1601, SL positioning capability information sent by a first terminal is received, in a case where the network device participates in SL positioning between terminals.

Step 1602, the SL positioning capability information forwarded by a third terminal is received, in a case where the first terminal is out of network coverage.

In embodiments of the present invention, the introduction to steps 1601-1602 may refer to the description of step 1001, and will not be elaborated in embodiments of the present invention here. Optional examples in embodiments of the present invention may be combined arbitrarily, and embodiments of the present invention may be combined with the steps of other embodiments and/or optional examples in other embodiments without contradiction.

To sum up, in the SL positioning capability transmission method according to embodiments of the present invention, an interactive method of the SL positioning capability in the case where the network device participates in the SL positioning between terminals is provided, so that the SL positioning capability of the UE is sent to a decision maker to facilitate the decision-making in the case where the network device participates in the SL positioning. Further, by receiving the SL positioning capability information forwarded by the third terminal, the situation where the network device cannot acquire the SL positioning capability information due to the first terminal being out of network coverage is avoided.

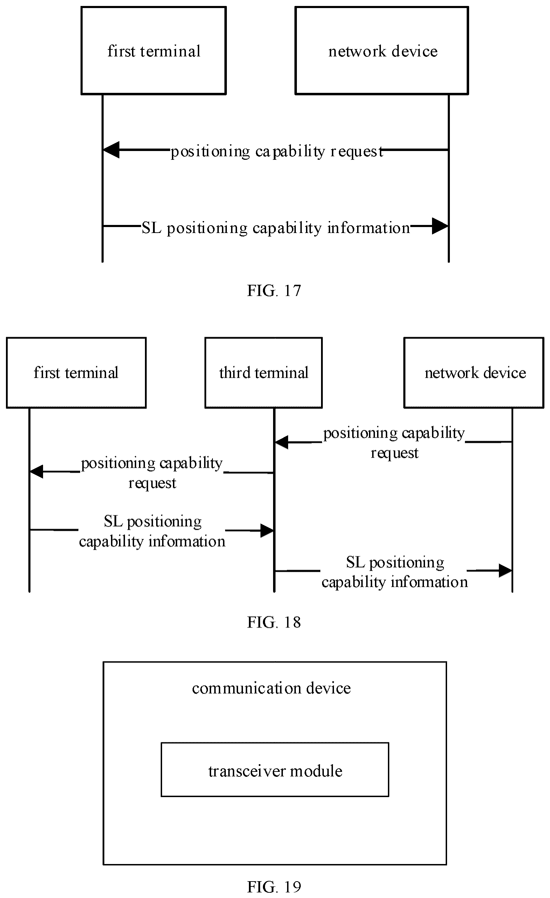

FIG. 17 is a schematic interactive diagram of an SL positioning capability transmission method according to embodiments of the present invention, as shown in FIG. 17, the SL positioning capability transmission method specifically includes the following steps.

Step 1701, the network device sends a positioning capability request to the first terminal, in a case where the first terminal is in network coverage.

Optionally, in implementations or embodiments of the present invention, the positioning capability request may be a first positioning capability request or a second positioning capability request. For detailed introduction to the first positioning capability request or the second positioning capability request, reference may be made to the relevant contents in the above embodiments, which will not be repeated here.

Step 1702, the first terminal sends SL positioning capability information to the network device.

In embodiments of the present invention, the introduction to step 1702 may refer to the description of step 901, and will not be elaborated in embodiments of the present invention here. Optional examples in embodiments of the present invention may be combined arbitrarily, and embodiments of the present invention may be combined with the steps of other embodiments and/or optional examples in other embodiments without contradiction.

FIG. 18 is a schematic interactive diagram of an SL positioning capability transmission method according to embodiments of the present invention, as shown in FIG. 18, the SL positioning capability transmission method specifically includes the following steps.

Step 1801, the network device sends a positioning capability request to the third terminal, in a case where the first terminal is out of network coverage.

Optionally, in implementations or embodiments of the present invention, the positioning capability request may be a first positioning capability request or a second positioning capability request. For detailed introduction to the first positioning capability request or the second positioning capability request, reference may be made to the relevant contents in the above embodiments, which will not be repeated here.

Step 1802, the third terminal sends the positioning capability request to the first terminal.

Optionally, in implementations or embodiments of the present invention, the positioning capability request sent by the third terminal to the first terminal may refer to the positioning capability request sent by the network device to the third terminal, that is, the third terminal forwards the positioning capability request sent by the network device to the first terminal.

Step 1803, the first terminal sends SL positioning capability information to the third terminal.

Step 1804, the third terminal sends the SL positioning capability information to the network device.

In embodiments of the present invention, the introduction to steps 1803-1804 may refer to the description of step 1001, and will not be elaborated in embodiments of the present invention here. Optional examples in embodiments of the present invention may be combined arbitrarily, and embodiments of the present invention may be combined with the steps of other embodiments and/or optional examples in other embodiments without contradiction.

FIG. 19 is a schematic block diagram of a communication device according to embodiments of the present invention, as shown in FIG. 19, the device may include: a transceiver module configured to send SL positioning capability information to a network device, in a case where the network device participates in SL positioning between terminals.

To sum up, with the communication device according to embodiments of the present invention, an interactive method of the SL positioning capability in the case where the network device participates in the SL positioning between terminals is provided, so that the SL positioning capability of the UE is sent to a decision maker to facilitate the decision-making in the case where the network device participates in the SL positioning.

Optionally, in an embodiment of the present invention, the first terminal is one of: a terminal initiating the SL positioning; a target terminal; or an anchor terminal.

Optionally, in an embodiment of the present invention, the SL positioning capability information includes at least one of: SL positioning capability information of the first terminal; or SL positioning capability information of a second terminal.

Optionally, in an embodiment of the present invention, the SL positioning capability information includes at least one of: identification information of a terminal of which the SL positioning capability information is to be reported, where the terminal of which the SL positioning capability information is to be reported includes the first terminal and/or the second terminal; an SL positioning style supported by the terminal of which the SL positioning capability information is to be reported; or an SL positioning bandwidth supported by the terminal of which the SL positioning capability information is to be reported.

Optionally, in an embodiment of the present invention, the second terminal includes one or more terminals located around the first terminal and having an SL positioning capability.

Optionally, in an embodiment of the present invention, the second terminal includes one or more terminals that are located around the first terminal, have the SL positioning capability, but are out of network coverage; or the second terminal includes one or more terminals that are located around the first terminal and in network coverage, have the SL positioning capability, but are not in a connected state.

Optionally, in an embodiment of the present invention, the device is further configured to: determine at least one candidate terminals that are located around the first terminal and have the SL positioning capability; and select one or more terminals from the at least one candidate terminals as the second terminal.

Optionally, in an embodiment of the present invention, the device is further configured to: acquire the SL positioning capability information of the second terminal, and send the SL positioning capability information of the second terminal to the network device.

Optionally, in an embodiment of the present invention, the device is further configured to: send indication information to the network device while sending the SL positioning capability information to the network device, and the indication information indicates descriptive information of a terminal of which the SL positioning capability information is to be reported.

Optionally, in an embodiment of the present invention, the indication information indicates at least one of:
whether the terminal of which the SL positioning capability information is to be reported being in network coverage;
a current state of the terminal of which the SL positioning capability information is to be reported;
identification information of the terminal of which the SL positioning capability information is to be reported;
a role supported by the terminal of which the SL positioning capability information is to be reported; or
an SL signal quality of the terminal of which the SL positioning capability information is to be reported.

Optionally, in an embodiment of the present invention, the terminal of which the SL positioning capability information is to be reported includes one of: a terminal, discovered by the first terminal, located around the first terminal and having the SL positioning capability; an anchor terminal determined by the first terminal; or a target terminal determined by the first terminal.

Optionally, in an embodiment of the present invention, the identification information of the terminal of which the SL positioning capability information is to be reported includes at least one of: a source layer 2 identification of the terminal of which the SL positioning capability information is to be reported; a target layer 2 identification of the terminal of which the SL positioning capability information is to be reported; an international mobile equipment identity (IMEI) of the terminal of which the SL positioning capability information is to be reported; an international mobile subscriber identity (IMSI) of the terminal of which the SL positioning capability information is to be reported; an SAE-temporary mobile subscriber identity (S-TMSI)/temporary mobile subscriber identity (TMSI) of the terminal of which the SL positioning capability information is to be reported; or an application layer identification of the terminal of which the SL positioning capability information is to be reported.

Optionally, in an embodiment of the present invention, the device is further configured to: receive a first positioning capability request sent by the network device, and the first positioning capability request is configured to request the SL positioning capability information of one or more terminals.

Optionally, in an embodiment of the present invention, the device is further configured to: receive, from the network device, a second positioning capability request for a terminal out of network coverage, and the second positioning capability request is configured to request the first terminal to provide the SL positioning capability information of the terminal out of network coverage.

Optionally, in an embodiment of the present invention, any one of the first positioning capability request and the second positioning capability request includes identification information of the terminal requested.

Optionally, in an embodiment of the present invention, the device is further configured to: send unavailable indication information to the network device, in a case where the first terminal fails to acquire the SL positioning capability information of the terminal requested by the network device.

Optionally, in an embodiment of the present invention, the device is further configured to: directly send the SL positioning capability information to the network device, in a case where the first terminal is in network coverage; or send the SL positioning capability information to the network device via a third terminal, in a case where the first terminal is out of network coverage.

Optionally, in an embodiment of the present invention, when sending the SL positioning capability information to the network device via the third terminal, the device is specifically configured to: select, from terminals located around the first terminal and supporting the SL positioning, a terminal in network coverage as the third terminal; and send the SL positioning capability information to the third terminal, which forwards the SL positioning capability information to the network device.

Optionally, in an embodiment of the present invention, the device is further configured to: send first forwarding indication information to the third terminal while sending the SL positioning capability information to the third terminal, where the first forwarding indication information is configured to indicate the third terminal to forward the SL positioning capability information to the network device; or send second forwarding indication information to the third terminal while sending the SL positioning capability information to the third terminal, where the second forwarding indication information is configured to indicate the third terminal whether to forward the SL positioning capability information to the network device.

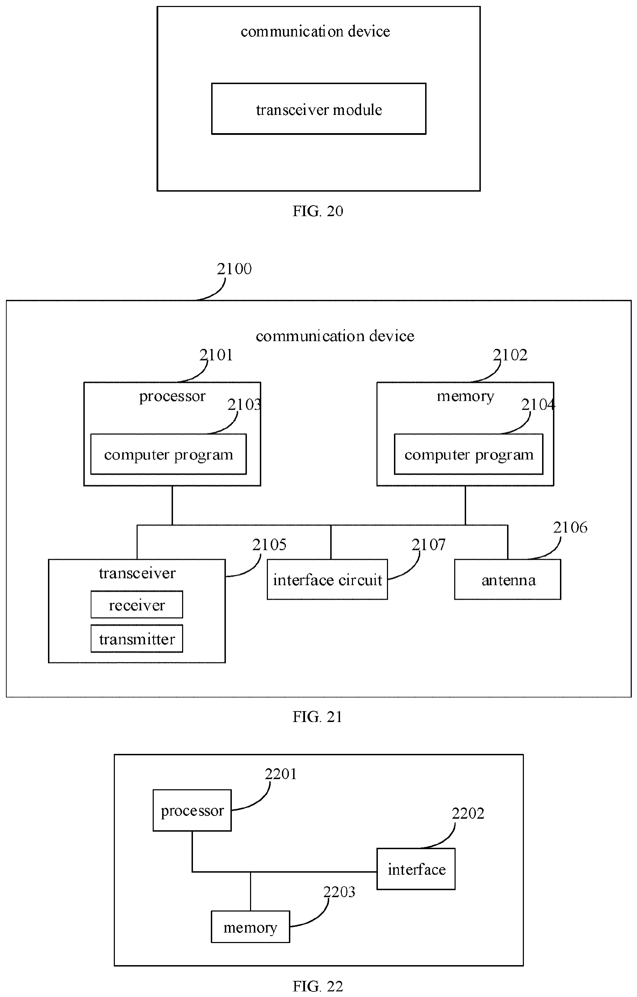

FIG. 20 is a schematic block diagram of a communication device according to embodiments of the present invention, as shown in FIG. 20, the device may include: a transceiver module configured to receive SL positioning capability information sent by a first terminal, in a case where the network device participates in SL positioning between terminals.

To sum up, with the communication device according to embodiments of the present invention, an interactive method of the SL positioning capability in the case where the network device participates in the SL positioning between terminals is provided, so that the SL positioning capability of the UE is sent to a decision maker to facilitate the decision-making in the case where the network device participates in the SL positioning.

Optionally, in an embodiment of the present invention, the first terminal is one of: a terminal initiating the SL positioning; a target terminal; or an anchor terminal.

Optionally, in an embodiment of the present invention, the SL positioning capability information includes at least one of: SL positioning capability information of the first terminal; or SL positioning capability information of a second terminal.

Optionally, in an embodiment of the present invention, the SL positioning capability information includes at least one of: identification information of a terminal of which the SL positioning capability information is to be reported, where the terminal of which the SL positioning capability information is to be reported includes the first terminal and/or the second terminal; an SL positioning style supported by the terminal of which the SL positioning capability information is to be reported; or an SL positioning bandwidth supported by the terminal of which the SL positioning capability information is to be reported.

Optionally, in an embodiment of the present invention, the second terminal includes one or more terminals located around the first terminal and having an SL positioning capability.

Optionally, in an embodiment of the present invention, the second terminal includes one or more terminals that are located around the first terminal, have the SL positioning capability, but are out of network coverage; or the second terminal includes one or more terminals that are located around the first terminal and in network coverage, have the SL positioning capability, but are not in a connected state.

Optionally, in an embodiment of the present invention, the device is further configured to: receive indication information sent by the first terminal while receiving the SL positioning capability information sent by the first terminal, and the indication information indicates descriptive information of a terminal of which the SL positioning capability information is to be reported.

Optionally, in an embodiment of the present invention, the indication information indicates at least one of: whether the terminal of which the SL positioning capability information is to be reported being in network coverage; a current state of the terminal of which the SL positioning capability information is to be reported; identification information of the terminal of which the SL positioning capability information is to be reported; a role supported by the terminal of which the SL positioning capability information is to be reported; or an SL signal quality of the terminal of which the SL positioning capability information is to be reported.

Optionally, in an embodiment of the present invention, the terminal of which the SL positioning capability information is to be reported includes one of: a terminal, discovered by the first terminal, located around the first terminal and having the SL positioning capability; an anchor terminal determined by the first terminal; or a target terminal determined by the first terminal.

Optionally, in an embodiment of the present invention, the identification information of the terminal of which the SL positioning capability information is to be reported includes at least one of: a source layer 2 identification of the terminal of which the SL positioning capability information is to be reported; a target layer 2 identification of the terminal of which the SL positioning capability information is to be reported; an international mobile equipment identity (IMEI) of the terminal of which the SL positioning capability information is to be reported; an international mobile subscriber identity (IMSI) of the terminal of which the SL positioning capability information is to be reported; an SAE-temporary mobile subscriber identity (S-TMSI)/temporary mobile subscriber identity (TMSI) of the terminal of which the SL positioning capability information is to be reported; an application layer identification of the terminal of which the SL positioning capability information is to be reported.

Optionally, in an embodiment of the present invention, the device is further configured to: send a first positioning capability request to the first terminal, and the first positioning capability request is configured to request the SL positioning capability information of one or more terminals.

Optionally, in an embodiment of the present invention, the device is further configured to: send, to the first terminal, a second positioning capability request for a terminal out of network coverage, and the second positioning capability request is configured to request the first terminal to provide SL positioning capability information of the terminal out of network coverage.

Optionally, in an embodiment of the present invention, the device is further configured to: determine a terminal in network coverage, and directly send a positioning capability request to the terminal in the network coverage; or determine a terminal in network coverage and in a connected or inactive state, and directly send a positioning capability request to the terminal in the network coverage and in the connected or inactive state.

Optionally, in an embodiment of the present invention, any one of the first positioning capability request and the second positioning capability request includes identification information of the terminal requested.

Optionally, in an embodiment of the present invention, the device is further configured to: receive unavailable indication information sent by the first terminal, in a case where the first terminal fails to acquire the SL positioning capability information of the terminal requested by the network device.

Optionally, in an embodiment of the present invention, the device is further configured to: receive the SL positioning capability information forwarded by a third terminal, in a case where the first terminal is out of network coverage.

Referring to FIG. 21, FIG. 21 is a schematic block diagram of a communication device 2100 according to embodiments of the present invention. The communication device 2100 may be a network device, may also be a terminal, may also be a chip, a chip system, or a processor that supports the network device to implement the above method, or may also be a chip, a chip system, or a processor that supports the terminal to implement the above method. The communication device may be used to implement the methods as described in the above method embodiments, and for details, reference may be made to the descriptions on the above method embodiments.

The communication device 2100 may include one or more processors 2101. The processor 2101 may be a general-purpose processor or a special-purpose processor. For example, it may be a baseband processor or a central processing unit. The baseband processor may be used to process a communication protocol and communication data, and the central processing unit may be used to control the communication device (such as a base station, a baseband chip, a terminal, a terminal chip, a DU or a CU, etc.), execute computer programs, and process data of computer programs.

Optionally, the communication device 2100 may further include one or more memories 2102 that may have stored therein a computer program 2104. The processor 2101 executes the computer program 2104 to cause the communication device 2100 to implement the methods as described in the above method embodiments. Optionally, the memory 2102 may have stored therein data. The communication device 2100 and the memory 2102 may be set separately or integrated together.

Optionally, the communication device 2100 may further include a transceiver 2105 and an antenna 2106. The transceiver 2105 may be called a transceiving element, a transceiving machine, a transceiving circuit or the like, for implementing a transceiving function. The transceiver 2105 may include a receiver and a transmitter. The receiver may be called a receiving machine, a receiving circuit or the like, for implementing a receiving function. The transmitter may be called a sending machine, a sending circuit or the like for implementing a sending function.

Optionally, the communication device 2100 may further include one or more interface circuits 2106. The interface circuit 2106 is configured to receive a code instruction and transmit the code instruction to the processor 2101. The processor 2101 runs the code instruction to cause the communication device 2100 to execute the methods as described in the foregoing method embodiments.

In an implementation manner, the processor 2101 may include a transceiver configured to implement receiving and sending functions. For example, the transceiver may be a transceiving circuit, an interface, or an interface circuit. The transceiving circuit, the interface or the interface circuit configured to implement the receiving and sending functions may be separated or may be integrated together. The above transceiving circuit, interface or interface circuit may be configured to read and write codes/data, or the above transceiving circuit, interface or interface circuit may be configured to transmit or transfer signals.

In an implementation manner, the processor 2101 may have stored therein a computer program 2103 that, when run on the processor 2101, causes the communication device 2100 to implement the method as described in the foregoing method embodiments. The computer program 2103 may be solidified in the processor 2101, and in this case, the processor 2101 may be implemented by hardware.

In an implementation manner, the communication device 2100 may include a circuit, and the circuit may implement the sending, receiving or communicating function in the foregoing method embodiments. The processor and the transceiver described in the present invention may be implemented on an integrated circuit (IC), an analog IC, a radio frequency integrated circuit (RFIC), a mixed-signal IC, an application specific integrated circuit (ASIC), a printed circuit board (PCB), an electronic device, etc. The processor and the transceiver may also be manufactured using various IC process technologies, such as a complementary metal oxide semiconductor (CMOS), an nMetal-oxide-semiconductor (NMOS), a P-type metal oxide semiconductor (PMOS, also called positive channel metal oxide semiconductor), a bipolar junction transistor (BJT), a bipolar CMOS (BiCMOS), silicon germanium (SiGe), gallium arsenide (GaAs), etc.

The communication device described in the above embodiments may be the network device or the terminal, but the scope of the communication device described in the present invention is not limited thereto, and a structure of the communication device is not limited to FIG. 21. The communication device may be a stand-alone device or may be a part of a large device. For example, the communication device may be:
(1) a stand-alone integrated circuit (IC), or a chip, or a chip system or a subsystem;
(2) a set of one or more ICs, optionally, the set of ICs may also include a storage component for storing data and computer programs;
(3) an ASIC, such as a modem;
(4) a module that may be embedded in other devices;
(5) a receiver, a terminal, an intelligent terminal, a cellular phone, a wireless device, a handheld machine, a mobile unit, a vehicle device, a network device, a cloud device, an artificial intelligence device, etc.;
(6) others.

For the case where the communication device may be a chip or a chip system, reference may be made to a schematic structural diagram of the chip shown in FIG. 22. The chip shown in FIG. 22 includes a processor 2201 and an interface 2202. Optionally, one or more processors 2201 may be provided, and a plurality of interfaces 2202 may be provided.

Optionally, the chip further includes a memory 2203 for storing necessary computer programs and data.

Those skilled in the art may also understand that various illustrative logical blocks and steps listed in embodiments of the present invention may be implemented by electronic hardware, computer software, or a combination thereof. Whether such functions are implemented by hardware or software depends on specific applications and design requirements of an overall system. For each specific application, those skilled in the art may use various methods to implement the described functions, but such implementation should not be understood as beyond the protection scope of embodiments of the present invention.

The present invention also provides a readable storage medium having stored therein instructions that, when executed by a computer, cause functions of any of the above method embodiments to be implemented.

The present invention also provides a computer program product that, when executed by a computer, causes functions of any of the above method embodiments to be implemented.

The above embodiments may be implemented in whole or in part by software, hardware, firmware or any combination thereof. When implemented using the software, the above embodiments may be implemented in whole or in part in a form of the computer program product. The computer program product includes one or more computer programs. When the computer program is loaded and executed on the computer, all or part of the processes or functions according to embodiments of the present invention will be generated. The computer may be a general purpose computer, a special purpose computer, a computer network, or other programmable devices. The computer program may be stored in a computer-readable storage medium or transmitted from one computer-readable storage medium to another computer-readable storage medium. For example, the computer program may be transmitted from one website site, computer, server or data center to another website site, computer, server or data center in a wired manner (such as via a coaxial cable, an optical fiber, a digital subscriber line (DSL)) or a wireless manner (such as via infrared, wireless, or microwave, etc.). The computer-readable storage medium may be any available medium that can be accessed by the computer, or a data storage device such as a server or a data center integrated by one or more available media. The available medium may be a magnetic medium (for example, a floppy disk, a hard disk, or a magnetic tape), an optical medium (for example, a high-density digital video disc (DVD)), or a semiconductor medium (for example, a solid state disk (SSD)) etc.

Those of ordinary skill in the art can understand that the first, second, and other numeral numbers involved in the present invention are only for convenience of description, and are not intended to limit the scope of embodiments of the present invention, nor are they intended to represent a sequential order.

The term "at least one" used in the present invention may also be described as one or more, and the term "a plurality of' may cover two, three, four or more, which are not limited in the present invention. In embodiments of the present invention, for a certain kind of technical features, the technical features in this kind of technical features are distinguished by terms like "first", "second", "third", "A", "B", "C" and "D", etc., and these technical features described with the "first", "second", "third", "A", "B", "C" and "D" have no order of priority and have no order of size.

The correspondence shown in each table in the present invention may be configured or predefined. The values of various information in each table are just examples, and may be configured as other values, which are not limited in the present invention. When configuring a correspondence between the information and various parameters, it is not necessary to configure all the correspondences shown in the tables. For example, the correspondences shown in some rows of a table in the present invention may not be configured. For another example, appropriate deformations or adjustments (such as splitting, merging, and so on) can be made based on the above table. The names of parameters shown in the titles of the above tables may also adopt other names understandable by the communication device, and the values or representations of the parameters may also be other values or representations understandable by the communication device. When the above tables are implemented, other data structures may also be used, for example, arrays, queues, containers, stacks, linear tables, pointers, linked lists, trees, graphs, structural body, classes, heaps, or hash tables may be used.

The term "predefinition" in the present invention may be understood as definition, definition in advance, storage, pre-storage, pre-negotiation, pre-configuration, curing, or pre-firing.

Those of ordinary skill in the art can appreciate that the units and algorithm steps of various examples described in conjunction with embodiments disclosed herein may be implemented by the electronic hardware, or a combination of the computer software and the electronic hardware. Whether these functions are executed by the hardware or the software depends on the specific applications and design constraints of the technical solution. For each particular application, those skilled in the art may use different methods to implement the described functions, but such implementation should not be considered beyond the scope of the present invention.

Those skilled in the art can clearly understand that for the convenience and brevity of the description, the specific working process of the above-described system, device and unit may refer to the corresponding process in the foregoing method embodiments, which will not be repeated here.

The above describes some specific implementations of the present invention, but the protection scope of the present invention is not limited thereto. Any changes or substitutions that are conceivable to those skilled in the art within the technical scope of the present invention should fall within the protection scope of the present invention. Therefore, the protection scope of the present invention should be determined by the protection scope of the claims.

## Claims

1. A Sidelink (SL) positioning capability transmission method, performed by a first terminal, comprising:
sending SL positioning capability information to a network device, in a case where the network device participates in SL positioning between terminals.

2. The method according to claim 1, wherein the first terminal is one of:
a terminal initiating the SL positioning;
a target terminal; or
an anchor terminal.

3. The method according to claim 1, wherein the SL positioning capability information comprises at least one of:
SL positioning capability information of the first terminal; or
SL positioning capability information of a second terminal.

4. The method according to claim 3, wherein the SL positioning capability information comprises at least one of:
identification information of a terminal of which the SL positioning capability information is to be reported, wherein the terminal of which the SL positioning capability information is to be reported comprises the first terminal and/or the second terminal;
an SL positioning style supported by the terminal of which the SL positioning capability information is to be reported; or
an SL positioning bandwidth supported by the terminal of which the SL positioning capability information is to be reported.

5. The method according to claim 3, wherein the second terminal comprises one or more terminals located around the first terminal and having an SL positioning capability.

6. The method according to claim 5, wherein the second terminal comprises one or more terminals that are located around the first terminal, have the SL positioning capability, but are out of network coverage; or
the second terminal comprises one or more terminals that are located around the first terminal and in network coverage, have the SL positioning capability, but are not in a connected state.

7. The method according to claim 5 or 6, further comprising:
determining at least one candidate terminals that are located around the first terminal and have the SL positioning capability; and
selecting one or more terminals from the at least one candidate terminals as the second terminal.

8. The method according to claim 3, further comprising:
acquiring the SL positioning capability information of the second terminal, and sending the SL positioning capability information of the second terminal to the network device.

9. The method according to claim 1, further comprising:
sending indication information to the network device while sending the SL positioning capability information to the network device, wherein the indication information indicates descriptive information of a terminal of which the SL positioning capability information is to be reported.

10. The method according to claim 9, wherein the indication information indicates at least one of:
whether the terminal of which the SL positioning capability information is to be reported being in network coverage;
a current state of the terminal of which the SL positioning capability information is to be reported;
identification information of the terminal of which the SL positioning capability information is to be reported;
a terminal role supported by the terminal of which the SL positioning capability information is to be reported; or
an SL signal quality of the terminal of which the SL positioning capability information is to be reported.

11. The method according to claim 9, wherein the terminal of which the SL positioning capability information is to be reported comprises one of:
a terminal, discovered by the first terminal, located around the first terminal and having the SL positioning capability;
an anchor terminal determined by the first terminal; or
a target terminal determined by the first terminal.

12. The method according to claim 4 or 10, wherein the identification information of the terminal of which the SL positioning capability information is to be reported comprises at least one of:
a source layer 2 identification of the terminal of which the SL positioning capability information is to be reported;
a target layer 2 identification of the terminal of which the SL positioning capability information is to be reported;
an international mobile equipment identity (IMEI) of the terminal of which the SL positioning capability information is to be reported;
an international mobile subscriber identity (IMSI) of the terminal of which the SL positioning capability information is to be reported;
a SAE-temporary mobile subscriber identity (S-TMSI)/temporary mobile subscriber identity (TMSI) of the terminal of which the SL positioning capability information is to be reported; or
an application layer identification of the terminal of which the SL positioning capability information is to be reported.

13. The method according to claim 1, further comprising:
receiving a first positioning capability request sent by the network device, wherein the first positioning capability request is configured to request the SL positioning capability information of one or more terminals.

14. The method according to claim 1, further comprising:
receiving, from the network device, a second positioning capability request for a terminal out of network coverage, wherein the second positioning capability request is configured to request the first terminal to provide the SL positioning capability information of the terminal out of network coverage.

15. The method according to claim 13 or 14, wherein any one of the first positioning capability request and the second positioning capability request comprises identification information of the terminal requested.

16. The method according to claim 13 or 14, further comprising:
sending unavailable indication information to the network device, in a case where the first terminal fails to acquire the SL positioning capability information of the terminal requested by the network device.

17. The method according to claim 1, further comprising:
directly sending the SL positioning capability information to the network device, in a case where the first terminal is in network coverage; or
sending the SL positioning capability information to the network device via a third terminal, in a case where the first terminal is out of network coverage.

18. The method according to claim 17, wherein sending the SL positioning capability information to the network device via the third terminal comprises:
selecting, from terminals located around the first terminal and supporting the SL positioning, a terminal in network coverage as the third terminal; and
sending the SL positioning capability information to the third terminal, which forwards the SL positioning capability information to the network device.

19. The method according to claim 17 or 18, further comprising:
sending first forwarding indication information to the third terminal while sending the SL positioning capability information to the third terminal, wherein the first forwarding indication information is configured to indicate the third terminal to forward the SL positioning capability information to the network device; or
sending second forwarding indication information to the third terminal while sending the SL positioning capability information to the third terminal, wherein the second forwarding indication information is configured to indicate the third terminal whether to forward the SL positioning capability information to the network device.

20. A Sidelink (SL) positioning capability transmission method, performed by a network device, comprising:
receiving SL positioning capability information sent by a first terminal, in a case where the network device participates in SL positioning between terminals.

21. The method according to claim 20, wherein the first terminal is one of:
a terminal initiating the SL positioning;
a target terminal; or
an anchor terminal.

22. The method according to claim 20, wherein the SL positioning capability information comprises at least one of:
SL positioning capability information of the first terminal; or
SL positioning capability information of a second terminal.

23. The method according to claim 22, wherein the SL positioning capability information comprises at least one of:
identification information of a terminal of which the SL positioning capability information is to be reported, wherein the terminal of which the SL positioning capability information is to be reported comprises the first terminal and/or the second terminal;
an SL positioning style supported by the terminal of which the SL positioning capability information is to be reported; or
an SL positioning bandwidth supported by the terminal of which the SL positioning capability information is to be reported.

24. The method according to claim 22, wherein the second terminal comprises one or more terminals located around the first terminal and having an SL positioning capability.

25. The method according to claim 24, wherein the second terminal comprises one or more terminals that are located around the first terminal, have the SL positioning capability, but are out of network coverage; or
the second terminal comprises one or more terminals that are located around the first terminal and in network coverage, have the SL positioning capability, but are not in a connected state.

26. The method according to claim 20, further comprising:
receiving indication information sent by the first terminal while receiving the SL positioning capability information sent by the first terminal, wherein the indication information indicates descriptive information of a terminal of which the SL positioning capability information is to be reported.

27. The method according to claim 26, wherein the indication information indicates at least one of:
whether the terminal of which the SL positioning capability information is to be reported being in network coverage;
a current state of the terminal of which the SL positioning capability information is to be reported;
identification information of the terminal of which the SL positioning capability information is to be reported;
a terminal role supported by the terminal of which the SL positioning capability information is to be reported; or
an SL signal quality of the terminal of which the SL positioning capability information is to be reported.

28. The method according to claim 26, wherein the terminal of which the SL positioning capability information is to be reported comprises one of:
a terminal, discovered by the first terminal, located around the first terminal and having the SL positioning capability;
an anchor terminal determined by the first terminal; or
a target terminal determined by the first terminal.

29. The method according to claim 23 or 27, wherein the identification information of the terminal of which the SL positioning capability information is to be reported comprises at least one of:
a source layer 2 identification of the terminal of which the SL positioning capability information is to be reported;
a target layer 2 identification of the terminal of which the SL positioning capability information is to be reported;
an international mobile equipment identity (IMEI) of the terminal of which the SL positioning capability information is to be reported;
an international mobile subscriber identity (IMSI) of the terminal of which the SL positioning capability information is to be reported;
a SAE-temporary mobile subscriber identity (S-TMSI)/temporary mobile subscriber identity (TMSI) of the terminal of which the SL positioning capability information is to be reported;
an application layer identification of the terminal of which the SL positioning capability information is to be reported.

30. The method according to claim 20, further comprising:
sending a first positioning capability request to the first terminal, wherein the first positioning capability request is configured to request the SL positioning capability information of one or more terminals.

31. The method according to claim 20, further comprising:
sending, to the first terminal, a second positioning capability request for a terminal out of network coverage, wherein the second positioning capability request is configured to request the first terminal to provide SL positioning capability information of the terminal out of network coverage.

32. The method according to claim 20, further comprising:
determining a terminal in network coverage, and directly sending a positioning capability request to the terminal in the network coverage; or
determining a terminal in network coverage and in a connected or inactive state, and directly sending a positioning capability request to the terminal in the network coverage and in the connected or inactive state.

33. The method according to any one of claims 30 to 32, wherein any one of the first positioning capability request and the second positioning capability request comprises identification information of the terminal requested.

34. The method according to claim 30, further comprising:
receiving unavailable indication information sent by the first terminal, in a case where the first terminal fails to acquire the SL positioning capability information of the terminal requested by the network device.

35. The method according to claim 20, further comprising:
receiving the SL positioning capability information forwarded by a third terminal, in a case where the first terminal is out of network coverage.

36. A communication device, comprising:
a transceiver module, configured to send Sidelink (SL) positioning capability information to a network device, in a case where the network device participates in SL positioning between terminals.

37. A communication device, comprising:
a transceiver module, configured to receive Sidelink (SL) positioning capability information sent by a first terminal, in a case where a network device participates in SL positioning between terminals.

38. A communication device, comprising:
a processor; and
a memory, having stored therein computer programs,
wherein the processor is configured to execute the computer programs stored in the memory to cause the device to perform the method according to any one of claims 1 to 19, or the processor is configured to execute the computer programs stored in the memory to cause the device to perform the method according to any one of claims 20 to 35.
